# EUROPEAN PATENT SPECIFICATION

(11) **EP 4 352 755 B1**
(45) Date of publication and mention of the grant of the patent: **09.12.2026**
(21) Application number: 22722541.4
(22) Date of filing: 03.05.2022
(51) Int. Cl.: H01C 7/04, H01C 17/065

(54) **IMPROVED NEGATIVE TEMPERATURE COEFFICIENT THERMISTOR**
THERMISTOR MIT NEGATIVEM TEMPERATURKOEFFIZIENTEN
THERMISTANCE À COEFFICIENT DE TEMPÉRATURE NÉGATIF AMÉLIORÉ

(30) Priority: 08.06.2021 FI 20215666
(43) Date of publication of application: 17.04.2024
(73) Proprietor: THE WARMING SURFACES COMPANY OY, 90620 Oulu (FI)
(72) Inventor: KOLOLUOMA, Terho, 90571 Oulu (FI)
(74) Representative: Boco IP Oy Ab
(86) International application number: PCT/FI2022/050288
(87) International publication number: WO 2022/258877

(56) References cited:
- WO-A1-2012/035494
- JP-A- 2009 181 732
- KR-A- 20170 100 129
- RU-C1- 2 401 518
- US-A1- 2004 217 844
- US-A1- 2020 020 467

## Description

### FIELD OF THE DISCLOSURE

The application relates to thermistors, and more particularly to a negative temperature coefficient type thermistor, a method for manufacturing such thermistor, and a printed electrical device including such thermistor.

### BACKGROUND

In a printed electronic device, one or more defined patterns of electrically functional ink have been formed on a suitable substrate. Examples of printing methods applicable for forming such electrically functional patterns include inkjet printing, offset lithography, gravure- and flexography printing, and screen printing, to mention some. One possible electrically functional pattern is a resistor, a passive two-terminal electrical component that creates resistance in the flow of electric current. By adjusting resistor characteristics, this resistance may be made dependent on a physical quantity, like temperature, light level, voltage, magnetic field, mechanical load, etc. All resistors have some dependency on temperature, and for many applications the temperature coefficient of the resistor is typically minimised. However, there are also several applications where dependency on temperature is effectively utilised, and a specific resistor whose resistance is configured to be strongly dependent on temperature is called a thermistor. A Negative Temperature Coefficient (NTC) thermistor is a resistor that has a negative temperature coefficient, which means that its resistance decreases as the temperature of the thermistor structure increases. A Positive Temperature Coefficient (PTS) thermistor is a resistor that has a positive temperature coefficient, which means that its resistance increases as the temperature of the thermistor structure increases.

NTC thermistors are more common in applications, and they are typically used as resistive temperature sensors, heating elements and current-limiting devices. A conventional NTC thermistor exhibits a large, precise and predictable decrease as the temperature of the resistor increases and achieves high precision within a limited temperature range (typically of about 50ºC) around a target temperature. Conventional NTC thermistors are manufactured by mixing two or more semiconductor powders made of metallic oxides with a binder to form a slurry. The slurry is then formed over the lead wires and sintered at temperatures of the order of 850 degrees to form a dense ceramic oxide with a specific crystal structure. During this process the slurry makes an electrical connection with the wires. These conventional thermistor structures perform well and are widely used, but they are naturally not applicable for printed electronics. Furthermore, typical metal oxides used in NTC thermistors include heavy metals like cobalt, nickel, and iron combined with manganese and titanium. Heavy metals are, however, toxic and therefore their use is no longer considered to meet the increasing sustainability requirements. They are also considered too risky for many modern applications, such as wearable electronics where these toxic materials would be in contact with skin, or thermal management of food chains where these toxic materials would be in contact with food or drinks.

An approach suitable for printed electronics is to use an ink comprising particles in a binder. The overall transport of electrical current follows a percolation path between interconnecting particles and clusters of particles such that the nominal, or room temperature, resistivity is governed in part by the microstructure of the particle layer. The problem of these printed thermistor structures is not only the use of heavy metals, they also tend to be more apt to suffer from drift, hysteresis and poor linear behaviour (cf. B value) than the conventional thermistor structures. Some printed electronics thermistors use silicon particles that have a size in the range of 10 nanometers to 100 micrometers and a surface that allows transport of electrical charge between the particles, limited by thermally activated processes. However, the availability of these silicon nanoparticle materials for industrial use has been problematic. There are also common concerns to the oxidative stability of silicon particles, so further alternatives are actively sought after.

US 2004/217844 A1 discloses a negative temperature coefficient type thermistor formed of particles within a polymer binder.

KR 2017 0100129 A discloses using LiMn₂O₄ in spinel structure as NTC material.

JP 2009181732 A discloses a sheet heating element formed on an electrically insulating substrate by screen printing.

WO 2012/035494 A1 discloses a method of producing a temperature sensing device by printing a silicon layer on a substrate.

US 2020/020467 A1 discloses a printed NTC temperature sensor.

RU 2401518 C1 discloses a PTC resistor to be used as a heating element. Coating material is compressed on a substrate using hot rollers.

### BRIEF DESCRIPTION

Examples of this application describe an improved negative temperature coefficient type thermistor structure that is printable and does not include toxic heavy metals.

This is achieved with a thermistor configuration, a method, and a printed electrical device characterized by what is stated in the independent claims. The preferred embodiments are disclosed in the dependent claims.

In the following examples, a negative temperature coefficient type thermistor comprises at least two conductor terminals and a thermistor structure formed of particles of lithium manganese oxide in a spinel structure within a polymer binder. The thermistor is configured to operate in a temperature range below a predefined first temperature and the polymer binder is selected so that its heat distortion temperature is higher than the first temperature. The manufacturing process further includes a stage of calendering the thermistor structure in a temperature that is higher than the heat distortion temperature of the polymer binder.

### BRIEF DESCRIPTION OF THE DRAWINGS

In the following the disclosure will be described in greater detail by means of preferred embodiments with reference to the accompanying drawings, in which
Figure 1 shows an example that illustrates layer structures of a negative temperature coefficient type thermistor;
Figures 2a to 2e illustrate the effect of a temperature-controlled calendering stage for the operability of the thermistor;
Figure 3 illustrates an alternative configuration for layer structures of the thermistor;
Figure 4 illustrates a further alternative configuration for layer structures of the thermistor; and
Figure 5 illustrates configuration of an electrical device that includes a negative temperature coefficient type thermistor.

### DETAILED DESCRIPTION

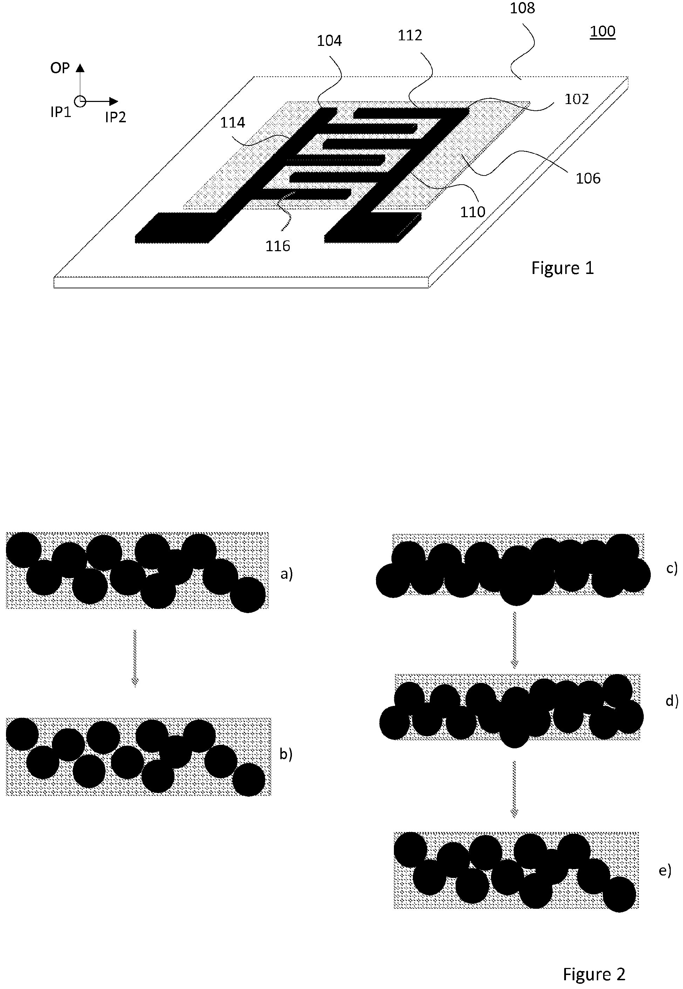

Figure 1 shows an example that illustrates layer structures of a negative temperature coefficient type thermistor 100. The term layer in this text refers to a thickness of deposited material that fully or partially covers an underlying surface, which in turn is formed by one or more previously deposited layers. The underlying surface may be planar if, for example, it is provided by a planar carrier sheet, or it may be patterned or curved resulting from formations in previously deposited layers. In sequentially progressing deposition stages, a presently deposited layer tends to conform to the form of the underlying surface and, for example, fill patterned recesses, if such exist in the underlying layer. A layer structure anyhow extends mainly in two mutually orthogonal in-plane directions IP1 and IP2 which form a reference plane. The thickness of each layer extends in an out-of-plane direction OP, which is orthogonal to the two in-plane directions IP1, IP2, as shown in Figure 1.

The thermistor includes at least two conductor terminals, a first terminal 102 and a second terminal 104. The conductor terminals 102, 104 establish electrical contacts to a thermistor structure 106, a volume of material whose resistance is strongly dependent on temperature. In the examples herein, the thermistor structure 106 is formed of particles of lithium manganese oxide in a spinel structure within a polymer binder.

Lithium manganese oxide in a spinel structure (LiMn2O4) has been detected to be a very advantageous particle material for printable thermistor structures because of its non-toxicity. It is also suitable for various applications because the overall conductivity of the thermistor structure can be varied by adjusting its lithium content. Lithium manganese oxide in its pristine spinel structure suffers from Jahn-Teller-distortions, but it has now been detected that in printed form, these do not have essential effect.

Electrical conduction in the thermistor structure occurs through a hopping percolation process. As described in Isihara A. (1998) Hopping, Percolation and Conductance Fluctuations. In: Electron Liquids. Springer Series in Solid-State Sciences, vol 96. Springer, Berlin, Heidelberg, pages 189-190, hopping of electrons between localized states at finite temperatures can cause conduction, and in order to sustain a finite conductivity hopping processes must be continued from one end to the other of a given system. Percolation depends on the concentration ratio of the conductive to nonconductive parts. If the probability of finding conductive parts is small, they are scattered like islands in a nonconductive ocean. As this probability increases these islands will start clustering together to form larger and larger clusters and finally macroscopic clusters connecting one end of the system to the other appear and conductive channels are opened.

The problem is, however, that changes in temperature affect also the polymer binder. In general, all substances expand or contract when their temperature changes, with expansion or contraction often occurring in all directions. Thermal expansion describes the tendency of matter to change its shape, area, volume, and density in response to a change in temperature. Furthermore, polymer materials tend to soften and harden according to changes in temperature. To control and utilise this effect, a softening point can be determined for applied materials. The softening point is the temperature at which a material softens beyond some selected softness. The heat deflection temperature or heat distortion temperature (HDT, HDTUL, or DTUL) of a polymer material is the temperature at which the polymer binder deforms under a specified load. The heat deflection temperature can be determined by a test procedure outlined in ASTM D648 and it is similar to the test procedure defined in the ISO 75 standard. In the test, the test specimen is loaded in three-point bending in the edgewise direction. The stress used for testing is either 0.455 MPa or 1.82 MPa, and the temperature is increased at 2 °C/min until at the heat deflection temperature, the specimen deflects 0.25 mm. Examples of applicable polymer binders thus include polymeric or silicone-type of binders such as esters, olephinic-polymers, vinyls, -urethanes, epoxies, acrylates, cyclo-olephinic polymers and co-polymers, styrenes, sulphones, silicones and silanes.

Accordingly, the ink composition now described has many advantages but with varying temperatures, changes in the percolation pathway tend to happen uncontrollably, and cause instability to the operation of the thermistor. For example, lithium manganese oxide particles may drift inside the expanding and/or softened polymer and randomly change the designed conductivity parameters and resistance response. To eliminate such effects, the described thermistor is configured so that the heat distortion temperature of the polymer binder is higher than the selected maximum operation temperature.

A further improvement may be provided in the manufacturing phase by calendering the thermistor structure in a temperature that is higher than the heat distortion temperature of the polymer binder. Calendering refers to a process of smoothing and compressing a material during production by passing a material web through one or more pairs of heated rolls. Figures 2a to 2e illustrate the effect of this temperature-controlled calendering stage for the operability of the thermistor. Figure 2a illustrates a thermistor structure 106 of Figure 1 comprising the lithium manganese oxide particles within the polymer binder. The conductive particles form a percolation pathway, conductivity of which is sensitive to changes in temperature. Figure 2b illustrates the same thermistor structure in a situation where the temperature has risen above the heat distortion temperature of the polymer binder. Due to expansion and softening of the polymer material, the lithium manganese oxide particles move and a distortion takes place in the percolation path. Figure 2c illustrates the same thermistor structure 106 that has been calendered using roll temperatures above the heat distortion temperature of the polymer binder. Due to this, the structure is compacted, and the particles have come to closer proximity of each other. When the thermistor structure cools down to temperatures below the heat distortion temperature of the polymer binder, it remains in this compacted form. The lithium manganese oxide particles within the solid elastic polymer are now more densely packed which enables higher conductivity of the thermistor.

Figure 2d illustrates an operational situation, where the temperature of the compacted thermistor structure has risen but remains in the designed operational range and is thus not above the heat distortion temperature of the polymer binder. The schematic drawing illustrates that the temperature change causes some expansion but particles are held together in the same compact proximity. Figure 2e illustrates a further situation where the temperature has risen above the designed operational range and is above heat distortion temperature of the polymer binder. The schematic drawing illustrates that the change of temperature causes further expansion and even softening of the polymer binder. However, even in these situations, the dense compacted package is less affected than the non-calendered one.

Returning back to Figure 1, it can be seen that the conductor terminals and the thermistor structure are layer structures, which means that the structure adapts well to industrial processing, specifically to processes of printed electronics. In the example of Figure 1, the thermistor structure 106 is printed on a carrier sheet 108 and the conductor terminals 102, 104 form a patterned layer structure that are printed on the thermistor structure 106. In the manufacturing process, calendering of the thermistor structure can be implemented at a stage where the web or sheet to be processed comprises the carrier sheet and the thermistor structure, or alternatively after also the conductor terminals have been printed.

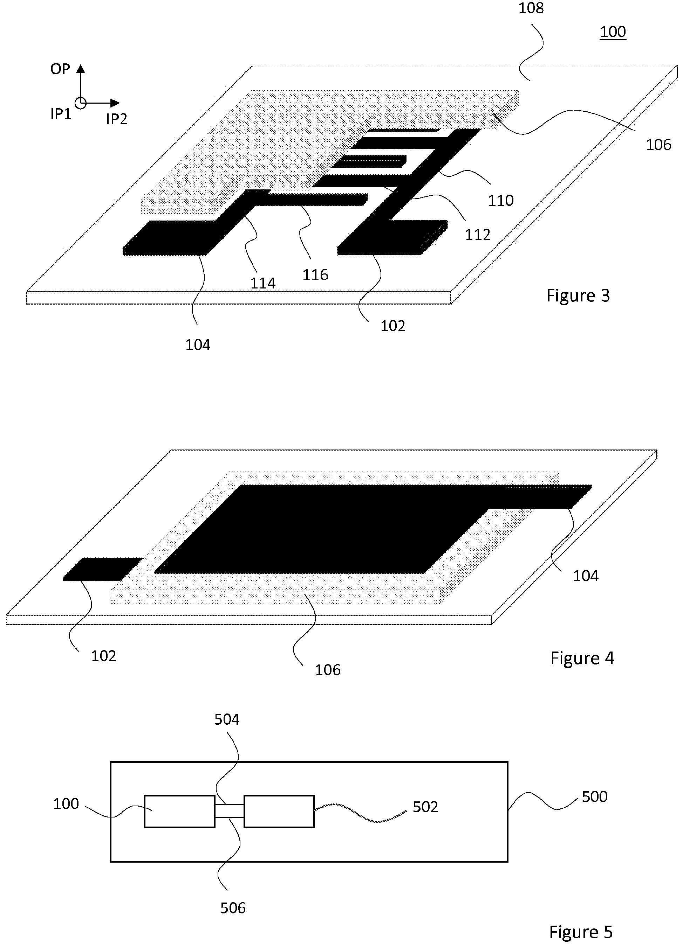

Figure 3 illustrates an alternative configuration, where the conductor terminals 102, 104 form a patterned layer structure that is printed on a carrier sheet 108 and the thermistor structure 106 is printed on the patterned layer structure of the conductor terminals. Only part of the thermistor structure is shown in the drawing to indicate the position of the conductor terminals 102, 104, advantageously the thermistor structure covers most of the conductor terminal patterns. In the manufacturing process, the accumulated web of the carrier sheet, the conductor terminals and the thermistor structure are advantageously calendered after deposition of the thermistor structure material.

In both examples of Figure 1 and Figure 3, a first terminal is denoted as 102 and a second terminal is denoted as 104. The first conductor terminal 102 forms a comb pattern that includes a stem part 110 and comb fingers 112 that project from the stem part 110. Correspondingly, the second first conductor terminal 104 forms a comb pattern that includes a stem part 114 and comb fingers 116 that project from the stem part 114. In order to increase the conductive path between the conductor terminals and thus accuracy of the detected change, comb fingers 110 of the first terminal 102 are interdigitated with comb fingers 112 of the second terminal 104.

Figure 4 illustrates an alternative configuration wherein the thermistor structure and the conductor terminals are stacked on each other. A first conductor terminal 102 is printed as a layer structure on a carrier sheet, the thermistor structure 106 is printed as a layer structure on the first conductor terminal 102. A second conductor terminal 104 is printed as a layer structure on the thermistor structure.

The block chart of Figure 5 illustrates configuration of a printed electrical device 500 that includes the negative temperature coefficient type thermistor 100 described with examples of Figures 1, 3 and 4. The thermistor 100 is electrically connected to a circuit structure 502 with conductors 504, 506 that have conductor terminals 102, 104 within the thermistor 100. The circuit structure 502 is configured to detect a change in resistance of the thermistor and implement an application function in response to that. Detection and measurement of changes in thermistor resistance is well known to a person skilled in the art and will not be described in more detail herein. The printed electrical device may be configured to use detected thermistor resistance responses to, for example, measure, control or compensate temperatures, limit current in power supply circuits, or detect absence or presence of liquids. Application fields for such electrical devices include, for example, battery management, diagnostics, health and wellbeing, food delivery chains to mention some. The proposed thermistor enables implementing these functions with a configuration that is free of toxic heavy metals, and is less prone to drift, hysteresis, or instability than the conventional thermistors including them. Furthermore, the proposed thermistor configuration adapts extremely well to printed electronics processes and can thus be integrated into overall industrial manufacturing processes of the electrical device.

## Claims

1. A negative temperature coefficient type thermistor (100) configured to operate in a temperature range below a predefined first temperature, wherein the thermistor (100) comprises at least two conductor terminals (102, 104) and a thermistor structure (106) formed of particles of lithium manganese oxide in a spinel structure within a polymer binder, wherein a heat distortion temperature of the polymer binder is higher than the first temperature
**characterized in that** the thermistor structure (106) has been compacted by calendering in a temperature that is higher than the heat distortion temperature of the polymer binder.

2. A thermistor (100) according to claim 1, **characterised in that** the conductor terminals (102, 104) and the thermistor structure (106) are layer structures.

3. A thermistor (100) according to claim 2, **characterised in that** the conductor terminals (102, 104) form a patterned layer structure printed on a carrier sheet (108) and the thermistor structure (106) is printed on the patterned layer structure of the conductor terminals (102, 104).

4. A thermistor (100) according to claim 2, **characterised in that** the thermistor structure (106) is printed on a carrier sheet (108) and the conductor terminals (102, 104) form a patterned layer structure printed on the thermistor structure (106).

5. A thermistor (100) according to claim 3 or 4, **characterised in that** the conductor terminals (102, 104) include a first terminal (102) and a second terminal (104);
each of the first terminal (102) and the second terminal (104) forms a comb pattern that includes a stem part (110, 114) and comb fingers (112, 116) that project from the stem part (110, 114);
the comb fingers (112) of the first terminal (102) are interdigitated with the comb fingers (116) of the second terminal (104).

6. A thermistor (100) according to claim 1, **characterised in that** a first conductor terminal of the conductor terminals (102, 104) forms a layer structure printed on a carrier sheet (108), the thermistor structure (106) forms a layer structure printed on the first conductor terminal (102) and a second conductor terminal (104) of the conductor terminals (102, 104) forms a layer structure printed on the thermistor structure (106).

7. A method for manufacturing a negative temperature coefficient type thermistor (100) that is configured to operate in a temperature range below a predefined first temperature, wherein the thermistor (100) comprises at least two conductor terminals (102, 104) and a thermistor structure (106), and the method comprises:
printing the thermistor structure (106) with an ink that includes particles of lithium manganese oxide in a spinel structure and a polymer binder, wherein a heat distortion temperature of the polymer binder is higher than the first temperature;
**characterized in that** the method comprises:
calendering the thermistor structure (106) in a temperature that is higher than the heat distortion temperature of the polymer binder.

8. A method according to claim 7, **characterised by** printing the conductor terminals (102, 104) and the thermistor structure (106) as layer structures.

9. A method according to claim 8, **characterised by** printing the conductor terminals (102, 104) as a patterned layer structure on a carrier sheet (108) and printing the thermistor structure (106) on the patterned layer structure of the conductor terminals (102, 104).

10. A method according to claim 8, **characterised by** printing the thermistor structure (106) on a carrier sheet (108) and printing the conductor terminals (102, 104) as a patterned layer structure on the thermistor structure (106).

11. A method according to claim 9 or 10, **characterised by** printing the conductor terminals (102, 104) to include a first terminal (102) and a second terminal (104), wherein the first terminal (102) and the second terminal (104) form a comb pattern that includes a stem part (110, 114) and comb fingers (112, 116) that project from the stem part (110, 114) and the comb fingers (112, 116) of the first terminal (102) are interdigitated with the comb fingers (116) of the second terminal (104).

12. A method according to claim 8, **characterised by**
printing a first conductor terminal (102) of the conductor terminals (102, 104) as a layer structure on a carrier sheet (108);
printing the thermistor structure (106) as a layer structure on the first conductor terminal (102); and
printing a second conductor terminal (104) of the conductor terminals (102, 104) as a layer structure on the thermistor structure (106).

13. A method according to any of claims 9 to 12, **characterised by** implementing the calendering stage after printing the thermistor structure (106).

14. A method according to any of claims 9 to 12, **characterised by** implementing the calendering stage after printing both the thermistor structure (106) and the conductor terminals (102, 104).

15. A printed electrical device (500) including the thermistor (100) according to any of claims 1 to 6.

## Patentansprüche

1. Thermistor mit negativem Temperaturkoeffizienten (100), der dazu ausgelegt ist, in einem Temperaturbereich unterhalb einer vordefinierten ersten Temperatur zu arbeiten, wobei der Thermistor (100) mindestens zwei Leiteranschlüsse (102, 104) und eine Thermistorstruktur (106), die aus Partikeln von Lithium-Mangan-Oxid in einer Spinellstruktur in einem Polymerbindemittel ausgebildet ist, umfasst, wobei die Wärmeformbeständigkeitstemperatur des Polymerbindemittels höher als die erste Temperatur ist,
**gekennzeichnet dadurch, dass** die Thermistorstruktur (106) durch Kalandrieren in einer Temperatur, die höher als die Wärmeformbeständigkeitstemperatur des Polymerbindemittels ist, verdichtet wurde.

2. Thermistor (100) nach Anspruch 1, **gekennzeichnet dadurch, dass** es sich bei den Leiteranschlüssen (102, 104) und bei der Thermistorstruktur (106) um Schichtstrukturen handelt.

3. Thermistor (100) nach Anspruch 2, **gekennzeichnet dadurch, dass** die Leiteranschlüsse (102, 104) eine auf einem Trägersubstrat (108) aufgedruckte strukturierte Schichtstruktur bilden und die Thermistorstruktur (106) auf die strukturierte Schichtstruktur der Leiteranschlüsse (102, 104) aufgedruckt ist.

4. Thermistor (100) nach Anspruch 2, **gekennzeichnet dadurch, dass** die Thermistorstruktur (106) auf einem Trägersubstrat (108) aufgedruckt ist und die Leiteranschlüsse (102, 104) eine auf der Thermistorstruktur (106) aufgedruckte strukturierte Schichtstruktur bilden.

5. Thermistor (100) nach Anspruch 3 oder 4, **gekennzeichnet dadurch, dass** die Leiteranschlüsse (102, 104) einen ersten Anschluss (102) und einen zweiten Anschluss (104) aufweisen;
der erste Anschluss (102) und der zweite Anschluss (104) jeweils ein Kamm-Muster bilden, das einen Stegteil (110, 114) und aus dem Stegteil (110, 114) herausragende Kammfinger (112, 116) aufweist;
die Kammfinger (112) des ersten Anschlusses (102) mit den Kammfingern (116) des zweiten Anschlusses (104) verschränkt sind.

6. Thermistor (100) nach Anspruch 1, **gekennzeichnet dadurch, dass** ein erster Leiteranschluss der Leiteranschlüsse (102, 104) eine auf einem Trägersubstrat (108) aufgedruckte Schichtstruktur bildet, die Thermistorstruktur (106) eine auf dem ersten Leiteranschluss (102) aufgedruckte Schichtstruktur bildet und ein zweiter Leiteranschluss (104) der Leiteranschlüsse (102, 104) eine auf der Thermistorstruktur (106) aufgedruckte Schichtstruktur bildet.

7. Verfahren zur Herstellung eines Thermistors mit negativem Temperaturkoeffizienten (100), der dazu ausgelegt ist, in einem Temperaturbereich unterhalb einer vordefinierten ersten Temperatur zu arbeiten, wobei der Thermistor (100) mindestens zwei Leiteranschlüsse (102, 104) und eine Thermistorstruktur (106) umfasst, und das Verfahren umfasst:
Drucken der Thermistorstruktur (106) mit einer Tinte, die Partikel von Lithium-Mangan-Oxid in einer Spinellstruktur und ein Polymerbindemittel aufweist, wobei die Wärmeformbeständigkeitstemperatur des Polymerbindemittels höher als die erste Temperatur ist;
**gekennzeichnet dadurch, dass** das Verfahren umfasst:
Kalandern der Thermistorstruktur (106) in einer Temperatur, die höher als die Wärmeformbeständigkeitstemperatur des Polymerbindemittels ist.

8. Verfahren nach Anspruch 7, **gekennzeichnet durch** Drucken der Leiteranschlüsse (102, 104) und der Thermistorstruktur (106) als Schichtstrukturen.

9. Verfahren nach Anspruch 8, **gekennzeichnet durch** Drucken der Leiteranschlüsse (102, 104) als strukturierte Schichtstruktur auf ein Trägersubstrat (108) und Drucken der Thermistorstruktur (106) auf die strukturierte Schichtstruktur der Leiteranschlüsse (102, 104).

10. Verfahren nach Anspruch 8, **gekennzeichnet durch** Drucken der Thermistorstruktur (106) auf ein Trägersubstrat (108) und Drucken der Leiteranschlüsse (102, 104) als strukturierte Schichtstruktur auf die Thermistorstruktur (106).

11. Verfahren nach Anspruch 9 oder 10, **gekennzeichnet durch** Drucken der Leiteranschlüsse (102, 104) dergestalt, dass sie einen ersten Anschluss (102) und einen zweiten Anschluss (104) aufweisen, wobei der erste Anschluss (102) und der zweite Anschluss (104) ein Kamm-Muster bilden, das einen Stegteil (110, 114) und aus dem Stegteil (110, 114) herausragende Kammfinger (112, 116) aufweist, und die Kammfinger (112, 116) des ersten Anschlusses (102) mit den Kammfingern (116) des zweiten Anschlusses (104) verschränkt sind.

12. Verfahren nach Anspruch 8, **gekennzeichnet durch**
Drucken eines ersten Leiteranschlusses (102) der Leiteranschlüsse (102, 104) als Schichtstruktur auf ein Trägersubstrat (108);
Drucken der Thermistorstruktur (106) als Schichtstruktur auf den ersten Leiteranschluss (102); und
Drucken eines zweiten Leiteranschlusses (104) der Leiteranschlüsse (102, 104) als Schichtstruktur auf die Thermistorstruktur (106).

13. Verfahren nach einem der Ansprüche 9 bis 12, **gekennzeichnet dadurch, dass** die Kalanderstufe nach dem Drucken der Thermistorstruktur (106) ausgeführt wird.

14. Verfahren nach einem der Ansprüche 9 bis 12, **gekennzeichnet dadurch, dass** die Kalanderstufe nach dem Drucken sowohl der Thermistorstruktur (106) als auch der Leiteranschlüsse (102, 104) ausgeführt wird.

15. Gedrucktes elektrisches Bauelement (500), das den Thermistor (100) nach einem der Ansprüche 1 bis 6 umfasst.

## Revendications

1. Thermistance du type à coefficient de température négatif (100) configurée pour fonctionner dans une plage de température inférieure à une première température prédéfinie, la thermistance (100) comprenant au moins deux raccordements de conducteur (102, 104) et une structure de thermistance (106) formée de particules d'un oxyde de lithium et de manganèse dans une structure de spinelle dans un liant polymère, la température de fléchissement sous charge du liant polymère étant supérieure à la première température,
**caractérisée en ce que** la structure de thermistance (106) a été compactée par calandrage dans une température qui est supérieure à la température de fléchissement sous charge du liant polymère.

2. Thermistance (100) selon la revendication 1, **caractérisée en ce que** les raccordements de conducteur (102, 104) et la structure de thermistance (106) sont des structures en couche.

3. Thermistance (100) selon la revendication 2, **caractérisée en ce que** les raccordements de conducteur (102, 104) forment une structure en couche structurée imprimée sur une feuille de substrat (108) et la structure de thermistance (106) est imprimée sur la structure en couche structurée des raccordements de conducteur (102, 104).

4. Thermistance (100) selon la revendication 2, **caractérisée en ce que** la structure de thermistance (106) est imprimée sur une feuille de substrat (108) et les raccordements de conducteur (102, 104) forment une structure en couche structurée sur la structure de thermistance (106).

5. Thermistance (100) selon la revendication 3 ou 4, **caractérisée en ce que** les raccordements de conducteur (102, 104) comprennent un premier raccordement (102) et un deuxième raccordement (104);
chacun des premier raccordement (102) et deuxième raccordement (104) forme un motif en peigne qui comprend une partie de base (110, 114) et des doigts de peigne (112, 116) qui s'étendent à partir de la partie de base (110, 114);
les doigts de peigne (112) du premier raccordement (102) sont interdigités avec les doigts de peigne (116) du deuxième raccordement (104).

6. Thermistance (100) selon la revendication 1, **caractérisée en ce qu'**un premier raccordement de conducteur des raccordements de conducteur (102, 104) forme une structure en couche imprimée sur une feuille de support (108), la structure de thermistance (106) forme une structure en couche imprimée sur le premier raccordement de conducteur (102) et un deuxième raccordement de conducteur (104) des raccordements de conducteur (102, 104) forme une structure en couche imprimée sur la structure de thermistance (106).

7. Procédé de fabrication d'une thermistance du type à coefficient de température négatif (100) qui est configurée pour fonctionner dans une plage de température inférieure à une première température prédéfinie, dans lequel la thermistance (100) comprend au moins deux raccordements de conducteur (102, 104) et une structure de thermistance (106), et le procédé comprend l'étape consistant à :
imprimer la structure de thermistance (106) avec une encre comprenant des particules d'un oxyde de lithium et de manganèse dans une structure de spinelle et un liant polymère, la température de fléchissement sous charge du liant polymère étant supérieure à la première température;
**caractérisé en ce que** le procédé comprend l'étape consistant à :
calandrer la structure de thermistance (106) dans une température qui est supérieure à la température de fléchissement sous charge du liant polymère.

8. Procédé selon la revendication 7, **caractérisé par** l'étape consistant à imprimer les raccordements de conducteur (102, 104) et la structure de thermistance (106) en tant que structures en couche.

9. Procédé selon la revendication 8, **caractérisé par** les étapes consistant à imprimer les raccordements de conducteur (102, 104) en tant que structure en couche structurée sur une feuille de substrat (108) et à imprimer la structure de thermistance (106) sur la structure en couche structurée des raccordements de conducteur (102, 104).

10. Procédé selon la revendication 8, **caractérisé par** les étapes consistant à imprimer la structure de thermistance (106) sur une feuille de substrat (108) et à imprimer les raccordements de conducteur (102, 104) en tant que structure en couche structurée sur la structure de thermistance (106).

11. Procédé selon la revendication 9 ou 10, **caractérisé en ce que** les raccordements de conducteur (102, 104) sont imprimés de manière à comprendre un premier raccordement (102) et un deuxième raccordement (104), dans lequel le premier raccordement (102) et le deuxième raccordement (104) forment un motif en peigne qui comprend une partie de base (110, 114) et des doigts de peigne (112, 116) qui s'étendent à partir de la partie de base (110, 114), et les doigts de peigne (112, 116) du premier raccordement (102) sont interdigités avec les doigts de peigne (116) du deuxième raccordement (104).

12. Procédé selon la revendication 8, **caractérisé par** les étapes consistant à :
imprimer un premier raccordement de conducteur (102) des raccordements de conducteur (102, 104) en tant que structure en couche sur une feuille de substrat (108);
imprimer la structure de thermistance (106) en tant que structure en couche sur le premier raccordement de conducteur (102); et
imprimer un deuxième raccordement de conducteur (104) des raccordements de conducteur (102, 104) en tant que structure en couche sur la structure de thermistance (106).

13. Procédé selon l'une quelconque des revendications 9 à 12, **caractérisé par** la mise en œuvre de l'étape de calandrage après l'impression de la structure de thermistance (106).

14. Procédé selon l'une quelconque des revendications 9 à 12, **caractérisé par** la mise en œuvre de l'étape de calandrage après l'impression tant de la structure de thermistance (106) que des raccordements de conducteur (102, 104).

15. Dispositif électrique imprimé (500) comprenant la thermistance (100) selon l'une des revendications 1 à 6.
